# NEUE EUROPÄISCHE PATENTSCHRIFT

(11) **EP 1 261 548 B2**
(45) Veröffentlichungstag und Bekanntmachung des Hinweises auf die Entscheidung über den Einspruch: **20.04.2016**
(45) Hinweis auf die Patenterteilung: 12.09.2007
(21) Anmeldenummer: 01917053.9
(22) Anmeldetag: 02.03.2001
(51) Int. Cl.: C01B 21/26, C01B 21/40

(54) **VERFAHREN ZUR HERSTELLUNG VON SALPETERSÄURE**
METHOD FOR PRODUCING NITRIC ACID
PROCEDE DE PRODUCTION D'ACIDE NITRIQUE

(30) Priorität: 10.03.2000 DE 10011335
(43) Veröffentlichungstag der Anmeldung: 04.12.2002
(73) Patentinhaber: ThyssenKrupp Industrial Solutions AG, 45143 Essen (DE)
(72) Erfinder: MAURER, Rainer, 58332 Schwelm (DE)
(74) Vertreter: Kilchert, Jochen
(86) Internationale Anmeldenummer: PCT/EP2001/002365
(87) Internationale Veröffentlichungsnummer: WO 2001/068520

(56) Entgegenhaltungen:
- EP-A- 0 945 400
- DE-A1- 1 916 814
- DE-A1- 2 148 329
- GB-A- 502 155
- 'The compact plant' NITROGEN Bd. 215, 26 Juni 1995, LONDON, ISSN 0029-0777 Seiten 32 - 33
- HÄNGGELI W.: 'Expansionstrurbinen für die Herstellung von Salpetersäure' TECHNISCHE RUNDSCHAU SULZER Bd. 2, 01 Januar 1986, WINTERTHUR, ISSN 0372-1353 Seiten 29 - 31
- BEITZ W.; KÜTTNER K.-H.: 'Taschenbuch für den Maschinenbau', Bd. 15, 1983, SPRINGER VERLAG, TOKYO vol. 'Luftbefeuchter - Luftentfeuchter - Schalldämpfer', Seite 677

## Beschreibung

Die vorliegende Erfindung richtet sich auf ein Verfahren zur Herstellung von Salpetersäure, wie es beispielsweise in der EP-A-0 945 400 beschrieben ist. Insbesondere wird ein Verfahren zur Herstellung von Salpetersäure nach dem Eindruck-Verfahren oder dem Zweidruck-Verfahren angegeben, in der die Verbrennung des eingesetzten Ammoniaks mittels verdichteter Prozessluft geschieht und das durch die Verbrennung gebildete Nitrosegas mindestens teilweise von Wasser absorbiert wird, wodurch die Salpetersäure entsteht, und das nicht absorbierte Restgas zwecks Gewinnung von Verdichterarbeit in einem Restgasexpander vom zweiten Druck auf Umgebungsdruck entspannt wird.

Zur Herstellung der Salpetersäure wird zunächst Ammoniak NH₃ mit Luft reaktiv umgesetzt und Stickstoffoxid NO erzeugt:

4 NH₃ + 5 O₂ -----> 4 NO + 6 H₂O + 907,3 kJ.

Das dabei anfallende Stickstoffoxid NO wird dann zu Stickstoffdioxid NO₂ aufoxidiert:

2 NO + O₂ -----> 2 NO₂ + 113,1 kJ.

Abschließend wird das so gewonnene Stickstoffdioxid NO₂ in Wasser absorbiert und es entsteht die Salpetersäure:

4 NO₂ + O₂ + 2 H₂O -----> 4 HNO₃ + 256,9 ./. 390,3 kJ.

Damit möglichst viel vom gewonnenen Stickstoffdioxid NO₂ vom Wasser absorbiert wird, geschieht die Absorption bei erhöhtem Druck. Absorbiert wird vorzugsweise bei Drucken zwischen 4 bis 14 bar.

Der für die Umsetzung des als Rohstoff eingesetzten Ammoniaks benötigte Sauerstoff wird als Luftsauerstoff zugeführt. Dazu wird die Prozessluft verdichtet und auf einen Druck gebracht, der sowohl der Oxidationsreaktion wie auch der Absorptlonsreaktion angepasst ist.

Die Energie zur Kompression der Luft wird einesteils mittels Entspannung des aus der Absorption austretenden Restgases auf Umgebungsdruck und anderenteils durch die Verwertung derbel den Umsetzungen freigesetzten Wärmen gewonnen.

Die in verschiedenen Ausführungen errichteten Salpetersäureanlagen sind an die speziellen Anforderungen ihres jeweiligen Standortes angepasst.

Elnsträngige Salpetersäureanlagen werden üblicherweise mit Nenn-Kapazitäten zwischen 100 bis 1 000 Tonnen Tagesproduktion Salpetersäure errichtet. Bei Verdoppelung des Reaktionsteils können somit einsträngig bis zu 2 000 Tonnen Tagesproduktion erreicht werden.

Ist die geforderte Tagesproduktion gering oder besitzt ein Standort vergleichsweise niedrigere Energiepreise, so wird die Salpetersäure-Anlage vorzugsweise nach dem Mono-Hochdruck-Verfahren ausgeführt. Bei diesem Verfahren erfolgt die Verbrennung des Ammoniaks und die Absorption der Stickstoffoxide bei etwa gleichem Druck von ca. 10 bar.

Sind große Nenn-Kapazitäten und/oder höhere Säurekonzentrationen gefordert, bietet eine nach dem Zweidruck-Verfahren ausgeführte Salpetersäureanlage die wirtschaftlichere Lösung.

Beim Zweidruck-Verfahren geschieht die Verbrennung des eingesetzten Ammoniaks bei einem ersten, und bei, - verglichen mit dem Absorptionsdruck -, niedrigerem Druck. Die bei der Verbrennung gebildeten nitrosen Gase, - auch Nitrosegas genannt -, werden nach der Kühlung mittels Nitrosegasverdichtung auf den zweiten Druck, den Absorptionsdruck, gebracht.

Die früher üblichen Anlagen mit Verbrennung bei Normaldruck und Mitteldruckabsorption sind heute durch die wirtschaftlicheren Eindruck- und Zweidruckverfahren abgelöst worden. Die produzierte Salpetersäure wird auch als unterazeotrope Salpetersäure bezeichnet, da sich beim eventuell nachgeschalteten Destillieren einer solchen Säure wegen der Bildung eines Azeotropes nur eine maximale Salpetersäurekonzentration von 68 % erreichen lässt. Zur Überwindung dieser Grenze sind in der Literatur eine große Anzahl von Verfahren vorgestellt worden.

Oft jedoch werden von den Verbrauchern der Salpetersäure Säurekonzentrationen von nur knapp oberhalb dieser 68 % gewünscht, etwa bei der Verwendung der Salpetersäure für die Produktion von Adipinsäure, von Caprolactam, von Toluoldiisocyanat oder anderen Stoffen, bei denen eine Nitrierung durch Salpetersäure erfolgt Es ist von daher ein seit langem bestehendes Bedürfnis der Industrie, ein wirtschaftliches Verfahren zur Erzeugung von Salpetersäure im Bereich von 68 bis 76 % zur Verfügung zu haben.

Die Aufgabe der Erfindung besteht daher darin, die bestehenden und bekannten Eindruck- und Zweidruckverfahren zur Herstellung von unterazeotroper Salpetersäure mit einfachen und wirtschaftlichen Mitteln dahingehend zu ertüchtigen, dass Salpetersäure bis zu einer Konzentration von 76 % damit hergestellt werden kann.

Die Erfindung löst die Aufgabe, durch ein Verfahren zur Herstellung von Salpetersäure im Konzentrationsbereich von 67 bis 76 Gewichts-% nach dem Eindruck-Verfahren oder dem Zweidruck-Verfahren, in dem die Verbrennung des eingesetzten Ammoniaks mittels verdichteter Prozessluft (23,24) geschieht, welche dem Verfahren von außen zugeführt wird und welche in ihrem Wasserdampfgehalt reduziert wird, indem sie getrocknet wird, und das durch die Verbrennung gebildete Nitrosegas mindestens teilweise von Wasser absorbiert wird, wodurch Salpetersäure entsteht, wobei die zur Strippung der erzeugten Salpetersäure von gelöstem N02 und NO verwendete Prozessluft (25) durch Waschen mit Produkt-Salpetersäure in einem Luftnachtrockner (22) nachgetrocknet wird.

Der Erfindung liegt der Gedanke zugrunde, den Wassereintrag in die Produkt-Salpetersäure zu minimieren. Am Wassereintrag ist der Eintrag als Feuchte über die Luft, welche als Verbrennungsluft und als Strippluft in den HNO₃-Entgaser eingetragen wird, erheblich beteiligt. Die Trocknung bewirkt, dass weniger Feuchte in die Produkt-Salpetersäure eingetragen wird.

Alle vorgenannten Ausgestaltungen verwenden dieselbe Erfindungsidee, der Fachmann muss bei der Auslegung der Anlage oder einer eventuellen Nachrüstung anhand wirtschaftlicher Gesichtspunkte im Einzelfall entscheiden, wie weit die Trocknung der Luft zu gehen hat, um die gewünschte Wirkung zu erzielen und welcher der Luftströme dafür zu trocknen Ist. Zu berücksichtigende technische Kriterien hierzu sind die zu erwartende Wasserdampfbeladung der Luft am Einsatzort des Verfahrens, der Wirkungsgrad der geplanten oder bereits in Betrieb befindlichen verfahrensgemäßen Verbrennungsvorrichtung von NH₃ mit Luft zu NOₓ und der gewünschte Konzentrationsgrad der zu erzeugenden Salpetersäure. Üblicherweise werden ca. 80 % der eingesetzten Prozessluft für die Verbrennung und ca. 20 % für die Strippung genutzt, was eine wirtschaftlich optimierte Aufteilung der Trocknung verschledener Teilströme der Prozessluft ermöglicht.

In weiterer Ausgestaltung der Erfindung ist vorgesehen, Kühlwasser mit einer Temperatur von 1 °C bis 20 °C für die Trocknung vorzusehen.

In weiterer Ausgestaltung der Erfindung ist vorgesehen, Kühlflüssigkeit von -25 °C bis 5 °C für die Trocknung vorzusehen.

Die Anordnung der Trocknungsvorrichtung zur Trocknung der Prozessluftströme erfolgt zweckmäßigerweise hinter dem Luftverdichter, was jedoch zur Erfüllung der erfindungsgemäßen Aufgabe nicht unbedingt erforderlich ist.

Die Erfindung wird im Folgenden an zwei Beispielen mit je einer Figur näher erläutert:

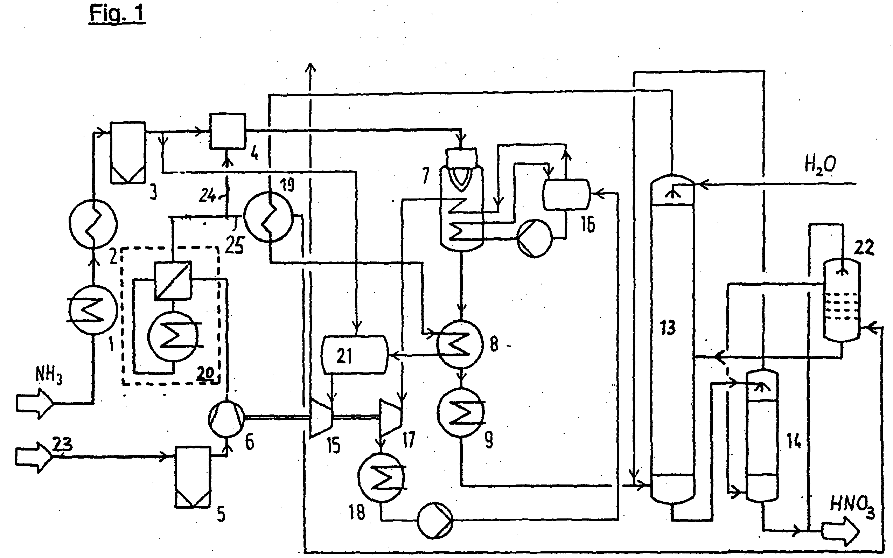

Figur 1 zeigt ein Eindruckverfahren mit einem NH₃-Verdampfer 1, einem NH₃-Gasvorwärmer 2, einem NH₃-Gasfilter 3, einem NH₃-Luftmischer 4, einem Luftfilter 5, einem Luftverdichter 6, einem erfindungsgemäßen Lufttrockner 20, einem NH₃-Brenner 7 mit La Mont-Abhftzekessel, einem Restgas-Erhitzer 8, einem Gaskühler 9, einem Absorptionsturm 13, einem HNO₃-Entgaser 14, einem Luftnachtrockner 22, einem Restgas-Vorwärmer 19, einem NOₓ-Reaktor 21, einer Restgas-Entspannungsturbine 15, einer Dampftrommel 16, einer Kondensations-Dampfturbine 17 und einem Kondensator 18.

Flüssiges Ammoniak wird mit einem Druck von ca. 16 bar abs, und einer Temperatur von ca. 25 °C angeliefert und dem NH₃-Verdampfer 1 zugeführt. Dieser steht annähernd unter einem Verdampfungsdruck von 14 bar abs., was einer Verdampfungstemperatur von 36 °C entspricht. In dem mit Niederdruckdampf beaufschlagten NH₃-Verdampfer 1 wird bei veränderlichen Temperaturen das flüssige Ammoniak nahezu vollständig verdampft. Dabei steigt die Verdampfungstemperatur abhängig von der Wasseranreicherung im Verdampfer an. Der Druck im Verdampfersystem kann durch Verändern der Stände und der Niederdruckdampfmenge bzw. dem -druck eingestellt werden.

Das verdampfte Ammoniak wird nach Passieren eines Tropfenabscheiders im dampfbeheizten NH₃-Gasvorwärmer 2 auf 140 °C erwärmt und im NH₃-Gasfilter 3 werden evtl. noch mitgerissene feste Bestandteile abgetrennt.

Der Verdichter des Turbosatzes - bestehend aus Luftverdichter 6, Restgas-Entspannungsturbine 15 und Kondensations-Dampfturbine 17 - saugt die für den Prozess benötigte atmosphärische, feuchte, d. h. mit Wasserdampf beladene Prozessluft 23 durch den Luftfilter 5 an und verdichtet sie auf 12 bar abs. mit einerTemperatur von ca. 250 °C.

Dieser Luftstrom wird erfindungsgemäß getrocknet, wobei in diesem Beispiel vorgesehen ist, möglichst soviel Feuchte zu entziehen, dass eine Salpetersäurekonzentration von 76 % erreicht wird. Der im Beispiel verwendete Lufttrockner 20 besitzt einen integrierten Luft/Luft-Wärmetauscher, der die in den Lufttrockner 20 einströmende Luft auf ca. 20 bis 40 °C abkühlt. Danach wird die vorgekühlte Luft mittels Kaltwasser In einem im Lufttrockner 20 Integrierten, indirekt wirkenden Kühler auf etwa 1 °C abgekühlt, wobei die von der Luft mitgeführte Feuchte infolge Taupunktunterschreitung der Luft an den Kühlerflächen ausfällt und so von der Luft abgetrennt wird. Hierdurch besitzt die den Kühler verlassende Luft eine verglichen mit ihrem Eintrittszustand verringerte Wasserbeladung, die Luft ist nun getrocknet.

Die getrocknete Luft wird nun an die wärmeaufnehmende Seite des im Lufttrockner 20 integrierten Luft/Luft-Wärmetauschers geleitet, auf welcher Seite die getrocknete Luft wieder auf 220 °C aufgeheizt wird.

Nachdem die getrocknete und aufgeheizte Luft aus dem Lufttrockner 20 herausgeführt ist, wird sie in zwei Prozessluft-Ströme (Primär- und Sekundärluft) 24 und 25 aufgeteilt.

Die Prozessluft 24 (Primärluft) und das Ammoniakgas werden dem NH₃-Luftmischer 4 zugeführt. Der Ammoniak-Gehalt im Mischgas wird von einer Verhältnisregelung bei etwa 10,1 Vol.-% konstant gehalten. In dem nachfolgenden NH₃-Brenner 7 oxidiert das Ammoniak an einem Pt-Rh-Katalysator bei einer Temperatur von 900°C zu Stickoxid. Die heißen Verbrennungsgase werden durch den baulich mit dem NH₃-Brenner 7 verbundenen La Mont-Abhitzekessel und den Restgas-Erhitzer 8 geleitet, in denen die Reaktionswärmen, die bei der Oxidation zu NO und NO₂ entstehen, nahezu vollständig zur Dampferzeugung und als Antriebsenergle (Restgas-Entspannungsturbine 15) ausgenutzt werden.

Im Gaskühler 9 erfolgt die Kühlung mit Krelslaufkühlwasser auf ca. 50°C, wobei der größte Teil des Reaktionswassers aus der Verbrennung kondensiert und sich Salpetersäure mit einer Konzentration von ca. 44 bis 50 Gewichts-% bildet.

Diese Säure wird von einer (nicht In Figur 1 gezeigten) Säurekondensatpumpe In den Absorptionsturm 13 auf einen Siebboden entsprechender Säurekonzentration gefördert.

Die Prozessluft 25 (Sekundärluft) wird im Restgasvorwärmer auf ca. 60 °C bis 80 °C abgekühlt, wobei sie ihre Wärme an das Restgas, welches den Absorptionsturm 13 verlässt, abgibt. Die Prozessluft 25 wird im HNO₃-Entgaser 14, auch als Bleichkolonne bezeichnet, zum Ausblasen der Rohsäure verwendet, bevor sie mit Nitrosegas beladen dem Hauptgasstrom vor der Absorption zugemischt wird. Bevor sie diese Funktion im HNO₃-Entgaser 14 wahrnimmt, wird sie im erfindungsgemäßen Luftnachtrockner 22, der in diesem Beispiel als HNO₃-Wäscher ausgeführt ist, mit Produkt-Salpetersäure gewaschen und somit nachgetrocknet.

Mit einer Temperatur von ca. 56 °C gelangt das verbleibende NO-Gas in den Absorptionsturm 13. Dieser ist mit Siebböden ausgerüstet. Die Bildung von Salpetersäure findet im Gegenstrom von NO-Gas und Prozesswasser, welches auf den obersten Boden gegeben wird, statt. Entsprechend dem Gleichgewicht zwischen NO₂ und HNO₃ fällt die Säurekonzentration infolge abnehmender NO₂-Konzentration in Richtung zum oberen Turmende ab. Die entstehende Reaktionswärme und ein Teil der fühlbaren Wärme wird über Kühlschlangen, die sich auf den Siebböden befinden, ans Kreislaufkühlwasser abgegeben. Je nach Konzentration wird die Säure vom 1., 2. bzw. 3. Siebboden (von unten gezählt) des Absorptionsturmes 13 abgezogen.

Die abgezogenen Rohsäure wird in den mit Pall-Ringen ausgerüsteten HNO₃-Entgaser 14 gefördert und mit der Prozessluft 25 (Sekundärluft) im Gegenstrom von den physikalisch gelösten Stickoxiden befreit.

Ein Teil der den HNO₃-Entgaser 14 verlassenden Salpetersäure ist fertige Salpetersäure, ein anderer Teil wird zum Waschen der Sekundärluft im Luftnachtrockner 22 benutzt. Die dadurch verdünnte Salpetersäure wird entweder dem Kondensat des Gaskühlers 9 zugemischt oder direkt auf einen Siebboden des Absorptionsturms 13 gleicher Konzentration aufgegeben.

Am Kopf des Absorptionsturms 13 wird das Restgas aus der Absorption abgegeben. Nach der Absorption wird das Restgas stufenweise von 25 °C aufgeheizt und zwar im Restgas-Vorwärmer 19 gegen Sekundärluft und im Restgas-Erhitzer 8 gegen NO-Gas auf ca. 350 °C. Nach der katalytischen Entstickung im NOₓ-Reaktor 21 wird es in der Restgas-Entspannungsturbine 15 entspannt.

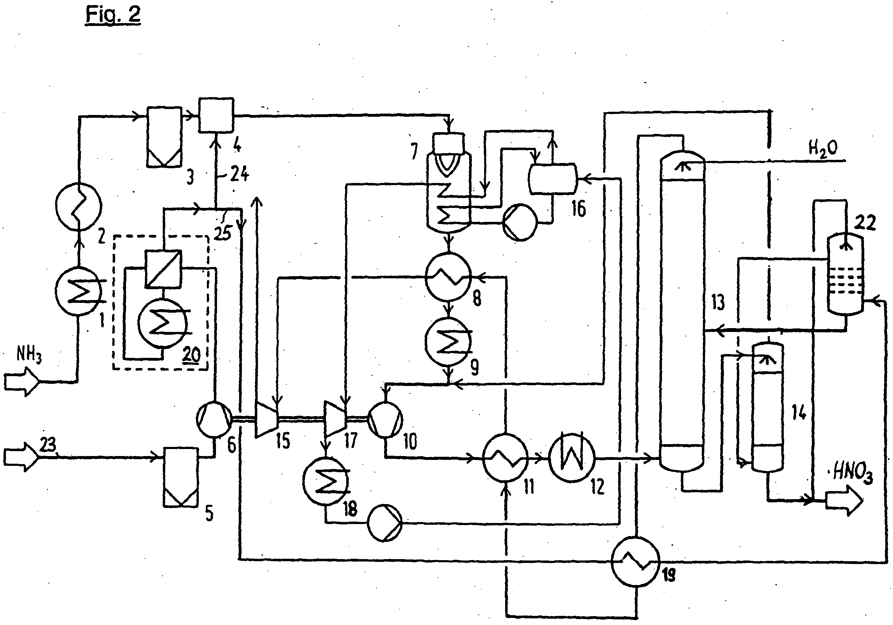

Figur 2 zeigt ein Zweidruckverfahren mit einem NH₃-Verdampfer 1, einem NH₃-Gasvorwärmer 2, einem NH₃-Gasfilter 3, einem NH₃-Luftmischer 4, einem Luftfilter 5, einem Luftverdichter 6, einem erfindungsgemäßen Lufttrockner 20, einem NH₃-Brenner 7 mit La Mont-Abhitzekessel, einem Restgas-Erhitzer 8, einem Gaskühler 9, einem NO-Verdichter 10, einem Restgas-Erhitzer 11, einem Gaskühler 12, einem Absorptionsturm 13, einem HNO₃-Entgaser 14, einen Luftnachtrockner 22, einem Restgas-Vorwärmer 19, einer Restgas-Entspannungsturbine 15, einer Dampftrommel 16, einer Kondensations-Dampfturbine 17 und einem Kondensator 18.

Flüssiges Ammoniak wird mit einem Druck von ca. 11 bar abs. und einer Temperatur von ca. 25 °C angeliefert und dem NH₃-Verdampfer 1 zugeführt. Dieser steht annähernd unter einem Verdampfungsdruck von 7,0 bar abs., was einer Verdampfungstemperatur von 14 °C entspricht. In dem mit erwärmtem Rücklauf-Kühlwasser beaufschlagten NH₃-Verdampfer 1 wird bei veränderlichen Temperaturen das flüssige Ammoniak nahezu vollständig verdampft. Dabei steigt die Verdampfungstemperatur abhängig von der Wasseranreicherung im Verdampfer an. Der Druck im Verdampfersystem kann durch Verändern der Stände und der Kühlwassermengen eingestellt werden.

Das verdampfte Ammoniak wird nach Passieren eines Tropfenabscheiders im dampfbeheizten NH₃-Gasvorwärmer 2 auf 80°C erwärmt und im NH₃-Gasfilter 3 werden evtl. noch mitgerissene feste Bestandteile abgetrennt.

Der Verdichter des Turbosatzes - bestehend aus Luftverdichter 6, NO-Verdichter 10, Restgas-Entspannungsturbine 15 und Kondensations-Dampfturbine 17 - saugt die für den Prozess benötigte atmosphärische, feuchte, d. h. mit Wasserdampf beladene Prozessluft 23 durch den Luftfilter 5 an und verdichtetsie auf 5,6 bar abs. mit einer Temperatur von ca. 254 °C.

Dieser Luftstrom wird erfindungsgemäß getrocknet, wobei in diesem Beispiel vorgesehen ist, möglichst soviel Feuchte zu entziehen, dass eine Salpetersäurekonzentration von 76 % erreicht wird. Der Im Beispiel verwendete Lufttrockner 20 besitzt einen integrierten Luft/Luft-Wärmetauscher, der die in den Lufttrockner 20 einströmende Luft auf ca. 20 bis 40 °C abkühlt. Danach wird die vorgekühlte Luft mittels Kaltwasser in einem im Lufttrockner 20 integrierten, indirekt wirkenden Kühler auf etwa 1 °C abgekühlt, wobei die von der Luft mitgeführte Feuchte infolge Taupunktunterschreitung der Luft an den Kühlerflächen ausfällt und so von der Luft abgetrennt wird. Hierdurch besitzt die den Kühler verlassende Luft eine verglichen mit ihrem Eintrittszustand verringerte Wasserbeladung, die Luft ist nun getrocknet.

Die getrocknete Luft wird nun die wärmeaufnehmende Seite des im Lufttrockner 20 integrierten Luft/Luft-Wärmetauschers geleitet, auf welcher Seite die getrocknete Luft wieder auf 220 °C aufgeheizt wird.

Nachdem die getrocknete und aufgeheizte Luft aus dem Lufttrockner 20 herausgeführt ist, wird sie in zwei Prozessluft-Ströme (Primär- und Sekundärluft) 24 und 25 aufgeteilt.

Die Prozessluft 24 (Primärluft) und das Ammoniakgas werden dem NH₃-Luftmischer 4 zugeführt. Der Ammoniak-Gehalt im Mischgas wird von einer Verhältnisregelung bei etwa 10,2 Vol.-% konstant gehalten. In dem nachfolgenden NH₃-Brenner 7 oxidiert das Ammoniak an einem Pt-Rh-Katalysator bei einer Temperatur von 890 °C zu Stickoxid. Das heiße Verbrennungsgas wird durch den baulich mit dem NH₃-Brenner 7 verbundenen La Mont-Abhitzekessel und den Restgaserhitzer 8 geleitet, In denen die Reaktionswärmen, die bei der Oxidation zu NO und NO₂ entstehen, nahezu vollständig zur Dampferzeugung und als Antriebsenergie (Restgas-Entspannungsturbine 15) ausgenutzt werden.

Im Gaskühler 9 erfolgt die Kühlung mit Kreislaufkühlwasser auf ca. 50 °C, wobei der größte Teil des Reaktionswassers aus der Verbrennung kondensiert und sich Salpetersäure mit einer Konzentration von ca. 44 bis 50 Gewichts-% bildet. Diese Säure wird von einer (nicht in Figur 2 gezeigten) Säurekondensatpumpe in den Absorptionsturm 13 auf einen Siebboden entsprechender Säurekonzentration gefördert.

Danach wird das abgekühlte Verbrennungsgas vom NO-Verdichter 10 weiter auf 11 bar verdichtet, wobei es sich erhitzt. Das erhitzte Gas wird im Restgas-Erhitzer 11 und im Gaskühler 12 auf 55 °C abgekühlt, wobei sich weitere Salpetersäure bildet, welche ebenfalls in den Absorptionsturm 13 auf einen Siebboden entsprechender Säurekonzentration gefördert wird.

Die Prozessluft 25 (Sekundärluft) wird im Restgas-Vorwärmer 19 auf ca. 60 °C bis 80 °C abgekühlt, wobei sie ihre Wärme an das Restgas, welches den Absorptionsturm 13 verlässt, abgibt. Die Prozessluft 25 wird im HNO₃-Entgaser 14, auch als Bleichkolonne bezeichnet, zum Ausblasen der Rohsäure verwendet, bevor sie mit Nitrosegas beladen dem Hauptgasstrom vor der Absorption zugemischt wird. Bevor sie diese Funktion im HNO₃-Entgaser 14 wahrnimmt, wird sie In dem erfindungsgemäßen Luftnachtrockner 22, - der in diesem Beispiel als HNO₃-Wäscher ausgeführt ist -, mit Produkt-Salpetersäure gewaschen und somit nachgetrocknet.

Mit einer Temperatur von ca. 56°C gelangt das verbleibende NO-Gas in den Absorptionsturm 13. Dieser ist mit Siebböden ausgerüstet. Die Bildung von Salpetersäure findet im Gegenstrom von NO-Gas und Prozesswasser, welches auf den obersten Boden gegeben wird, statt. Entsprechend dem Gleichgewicht zwischen NO₂ und HNO₃ fällt die Säurekonzentration infolge abnehmender NO₂-Konzentration in Richtung zum oberen Turmende ab. Die entstehende Reaktionswärme und ein Teil der fühlbaren Wärme wird über Kühlschlangen, die sich auf den Siebböden befinden, ans Kreislaufkühlwasser abgegeben. Je nach Konzentration wird die Säure vom 1., 2. bzw. 3. Siebboden (von unten gezählt) des Absorptionsturmes 13 abgezogen.

Die abgezogenen Rohsäure wird in den mit Pall-Ringen ausgerüsteten HNO₃-Entgaser 14 gefördert und mit der Prozessluft 25 (Sekundärluft) im Gegenstrom von den physikalisch gelösten Stickoxiden befreit.

Ein Teil der den HNO₃-Entgaser 14 verlassenden Salpetersäure ist fertige Salpetersäure, ein anderer Teil wird zum Waschen der Sekundärluft im Luftnachtrockner 22 benutzt. Die dadurch verdünnte Salpetersäure wird entweder dem Kondensat des Gaskühlers 9 zugemischt oder direkt auf einen Siebboden des Absorptionsturms 13 aufgegeben, auf welchem Siebboden die gleiche Konzentration herrscht

Nach der Absorption wird das Restgas stufenweise von 25°C aufgeheizt und zwar im Restgas-Vorwärmer 19 gegen Sekundärluft, und in den Restgaserhitzem 8 und 11 gegen NO-Gas auf ca. 350 °C. Danach wird es in der Restgasturbine 15 entspannt.

### Bezugszeichenliste:

- 1: NH₃-Verdampfer
- 2: NH₃-Gasvorwärmer
- 3: NH₃-Gasfilter
- 4: NH₃-Luftmischer
- 5: Luftfilter
- 6: Luftverdichter
- 7: NH₃-Brenner
- 8: Restgas-Erhitzer
- 9: Gaskühler
- 10: NO-Verdichter
- 11: Restgas-Erhitzer
- 12: Gaskühler
- 13: Absorptionsturm
- 14: HNO₃-Entgaser
- 15: Restgas-Entspannungsturbine
- 16: Dampftrommel
- 17: Kondensations-Dampfturbine
- 18: Kondensator
- 19: Restgas-Vorwärmer
- 20: Lufttrockner
- 21: NOx-Reaktor
- 22: Luftnachtrockner
- 23: Prozessluft
- 24: Prozessluft (Primärluft)
- 25: Prozessluft (Sekundärluft)

## Patentansprüche

1. Verfahren zur Herstellung von Salpetersäure im Konzentrationsbereich von 67 bis 76 Gewichts-% nach dem Eindruck-Verfahren oder dem Zweidruck-Verfahren,
• in dem die Verbrennung des eingesetzten Ammoniaks mittels verdichteter Prozessluft (23,24) geschieht, welche dem Verfahren von außen zugeführt wird und welche in ihrem Wasserdampfgehalt reduziert wird, indem sie getrocknet wird, und
• das durch die Verbrennung gebildete Nitrosegas mindestens teilweise von Wasser absorbiert wird, wodurch Salpetersäure entsteht,
**dadurch gekennzeichnet, dass**
die zur Strippung der erzeugten Salpetersäure von gelöstem NO₂ und NO verwendete Prozessluft (25) durch Waschen mit Produkt-Salpetersäure in einem Luftnachtrockner (22) nachgetrocknet wird.

2. Verfahren nach Anspruch 1,
**dadurch gekennzeichnet, dass**
die Trocknung der Prozessluft (23, 24, 25) im Wärmetausch mit Kaltwasser, welches eine Temperatur von 1°C bis 20°C aufweist, durchgeführt wird.

3. Verfahren nach Anspruch 1,
**dadurch gekennzeichnet, dass**
die Trocknung der Prozessluft (23, 24, 25) im Wärmetausch mit einer Kühlflüssigkeit, welche eine Temperatur von -25°C bis 5°C aufweist, durchgeführt wird.

## Claims

1. Process for the production of nitric acid of a concentration ranging from 67% to 76% by weight using the mono-pressure or the dual-pressure process,
• in which the applied ammonia is combusted with the aid of compressed process air (23,24) that is supplied to the process from outside and whose water vapour content is reduced by drying, and
• in which the nitrous gas formed during combustion is at least partly absorbed by water, thus forming nitric acid,
**characterized in that**
the process air (25), which is used for stripping the produced nitric acid to remove the dissolved NO₂ and NO, is dried again by scrubbing it with product nitric acid in an air dryer (22).

2. Process according to claim 1,
**characterized in that**
the process air (23, 24, 25) is dried by heat exchange with cold water of a temperature between 1°C and 20°C.

3. Process according to claim 1,
**characterized in that**
the process air (23, 24, 25) is dried by heat exchange with a liquid coolant of a temperature between -25°C and 5°C.

## Revendications

1. Procédé pour la production d'acide nitrique, d'une concentration de 67% à 76% en poids, par la méthode à mono-pression ou à double-pression,
• dans laquelle la combustion de l'ammoniac mis en oeuvre a lieu à l'aide d'air comprimé de procédé (23, 24), qui est introduit de l'extérieur dans le procédé et qui est soumis à un séchage pour réduire la vapeur d'eau et
• dans laquelle le gaz nitreux obtenu par la combustion est, au moins, absorbé en partie par l'eau pour produire ainsi de l'acide nitrique,
**caractérisé en ce que**
l'air de procédé (25) mis en oeuvre pour le strippage de l'acide nitrique produit, afin d'éliminer les NO₂ et NO dissous, est soumis à un séchage postérieur par lavage à l'acide nitrique produit dans un séchoirs d'air (22).

2. Procédé selon la revendication 1,
**caractérisé en ce que**
le séchage de l'air de procédé (23, 24, 25) a lieu par un échange de chaleur avec de l'eau froide avec une température de 1°C à 20°C.

3. Procédé selon la revendication 1,
**caractérisé en ce que**
le séchage de l'air de procédé (23, 24, 25) a lieu par un échange de chaleur avec un liquide de refroidissement avec une température de -25°C à 5°C.
